# EUROPÄISCHE PATENTSCHRIFT

(11) **EP 1 927 483 B1**
(45) Veröffentlichungstag und Bekanntmachung des Hinweises auf die Patenterteilung: **15.05.2013**
(21) Anmeldenummer: 07120731.0
(22) Anmeldetag: 14.11.2007
(51) Int. Cl.: B25J 15/10, B60C 25/05, B60C 25/132

(54) **Vorrichtung zur Montage eines Luftreifens auf eine Felge eines Fahrzeugrades**
Device for mounting a pneumatic tyre onto a vehicle wheel rim
Dispositif pour le montage d'un pneumatique sur une jante d'une roue de véhicule automobile

(30) Priorität: 01.12.2006 DE 102006057171
(43) Veröffentlichungstag der Anmeldung: 04.06.2008
(73) Patentinhaber: Schenck RoTec GmbH, 64293 Darmstadt (DE)
(72) Erfinder: Rogalla, Martin, 64297 Darmstadt (DE); Lehr, Werner, 64397 Modautal (DE)
(74) Vertreter: Haar, Lucas Heinz Jörn

(56) Entgegenhaltungen:
- DE-A1- 3 521 821
- DE-A1- 4 003 848
- DE-A1-102005 001 212
- DE-U1- 9 103 506
- JP-A- 4 159 092
- JP-A- 53 018 165
- US-B1- 6 626 476

## Beschreibung

Die Erfindung betrifft eine Vorrichtung zur Montage eines Luftreifens auf eine Felge eines Fahrzeugrades mit einem Handhabungsroboter, der eine um mehrere Achsen bewegbare Roboterhand mit einem drehend antreibbaren Flansch aufweist, und mit einem an der Roboterhand angebrachten Greifer, der einen Grundkörper und wenigstens zwei radial zur Mittelachse des Greifers bewegbare Greiferarme aufweist, wobei die Greiferarme mit einer Synchronisiereinrichtung gekoppelt sind, welche die radiale Bewegung der Greiferarme synchronisiert.

Aus US 6 626 476 B1 ist ein gattungsgemäßer Robotergreifer bekannt, mit einer Schiene, einem drehenden Aktor und Gleitelementen, die bewegbar an der Schiene gehalten sind und jeweils einen Greiferfinger tragen. Der drehende Aktor hat einen drehbaren Arm, dessen Enden jeweils mittels einer Kuppelstange und Gelenken mit einem Gleitelement derart verbunden sind, dass eine Drehung des Arms je nach Drehrichtung die Gleitelemente synchron voneinander weg oder zueinander hin bewegt.

Es ist weiterhin aus DE 35 21 821 A1 ein Greifer einer Werkstückhandhabungseinrichtung bekannt, die aus einem Greiferantriebsgehäuse und einem Greifergetriebegehäuse besteht, das ein drehend antreibbares Koppelelement und Zugstangen für die gegenläufige Betätigung zweier Spannfinger beinhaltet. Die Spannfinger sind hierbei in Gradführungen des Greifergetriebegehäuses bewegbar geführt.

Ein Greifer mit parallel beweglichen Greiferfingern ist weiterhin aus JP 53018165 A bekannt. Die Greiferfinger sind hierbei auf zwei parallel nebeneinander in einem Gehäuse angeordneten Führungsstangen gelagert und durch einen Drehantrieb synchron bewegbar, der über Kuppelglieder und Gelenke an die Greiferfinger gekuppelt ist.

Ein Verfahren zur automatischen Montage von Luftreifen auf Felgen unter Verwendung eines Handhabungsroboters hat sich als sehr vorteilhaft erwiesen und ist Gegenstand der Patentanmeldung DE 10 2005 030 692.6. Die Handhabung und Montage der Luftreifen erfolgt bei diesem Verfahren mit Hilfe eines Greifers, der an dem Schwenkarm oder der Roboterhand des Handhabungsroboters angebracht ist und der die Luftreifen in geeigneter Weise greifen und halten kann. Hierbei hat es sich als vorteilhaft herausgestellt, wenn die Luftreifen von dem Greifer am Außenumfang im Bereich der Lauffläche gegriffen werden und wenn sich der Luftreifen mit einer Seitenwand an dem Greifer abstützt. Es ist weiterhin erforderlich, dass die Greiferfinger oder -arme, die den Luftreifen umgreifen, synchron zueinander und auseinander bewegt werden, damit die gegriffenen Luftreifen immer in eine definierte Mittellage in Bezug auf den Greifer und damit auch in Bezug auf die Roboterhand gelangen. Ferner soll es möglich sein, Luftreifen mit verschiedenen Außendurchmessern zu greifen. Der Greifer soll daher in einem großen Durchmesserbereich eingesetzt werden können. Die Greifbewegung des Greifers soll möglichst schnell durchführbar sein und die Kräfte zum Halter der Reifen sollen variierbar sein.

Der Erfindung liegt die Aufgabe zugrunde, eine zur Erfüllung der genannten Anforderungen geeignete Vorrichtung der eingangs genannten Art zu schaffen, die sich durch eine zuverlässige Betriebsweise und einen einfachen und kostengünstigen Aufbau auszeichnet.

Die Aufgabe wird durch die in Patentanspruch 1 angegebenen Merkmale gelöst. Vorteilhafte Weiterbildungen sind in den Unteransprüchen angegeben.

Nach der Erfindung ist vorgesehen, dass die Synchronisiereinrichtung eine an dem Grundkörper des Greifers um dessen Mittelachse drehbar gelagerte und durch einen Motor drehend antreibbare Scheibe und Kuppelglieder aufweist, die mittels Gelenken an der Scheibe und den Greiferarmen derart befestigt sind, dass eine Drehung der Scheibe eine synchrone, radiale Bewegung der Greiferarme bewirkt, wobei der Grundkörper des Greifers an dem drehend antreibbaren Flansch der Roboterhand befestigt ist und die drehbar an dem Grundkörper gelagerte Scheibe durch einen separaten, an dem Grundkörper befestigten Motor drehend antreibbar ist. Diese Gestaltung bietet die Möglichkeit, den Greifer und damit den von ihm gehaltenen Reifen um seine Rotationsachse zu drehen. Dies ist z.B. dann erforderlich, wenn der Reifen für das Uniformitymatchen in einer definierten Winkelstellung auf der Felge montiert werden soll. Diese Funktion kann dann mit Hilfe der erfindungsgemäßen Vorrichtung erfüllt werden, wobei der höhere Bauaufwand gerechtfertigt ist, da eine eigenständige Matchmaschine eingespart werden kann. Der Flansch der Roboterhand ist vorzugsweise mit einem Stellantrieb versehen und durch diesen in beliebige Drehwinkelstellungen bewegbar und iri den Drehwinkelstellungen feststellbar. Durch die erfindungsgemäße Gestaltung wird weiterhin mit einfachen Mitteln ein Antrieb der Greiferarme geschaffen, der sich besonders vorteilhaft in einen Handhabungsroboter üblicher Ausgestaltung integrieren lässt. Die Synchronisiereinrichtung ist aus einfachen, kostengünstigen Bauteilen zusammengesetzt und zur Übertragung der benötigten Spannkräfte gut geeignet. Durch die Verwendung von Kuppelgliedern mit Gelenken ist ein verschleiß- und wartungsarmer Betrieb gewährleistet.

Erfindungsgemäß kann weiterhin vorgesehen sein, dass jeder Greiferarm zwei parallele Lenker hat, die jeweils durch Drehgelenke mit ihren einen Enden mit dem Grundkörper und mit ihren anderen Enden mit einem Greiferfinger derart schwenkbar verbunden sind, dass die Lenker eine Parallelführung der Greiferfinger bilden, Hierdurch wird erreicht, dass die beispielsweise parallel zur Mittelachse des Greifers ausgerichteten Greiferfinger unabhängig vom Durchmesser des gegriffenen Reifens ihre parallele Ausrichtung beibehalten und sich vollflächig an der Lauffläche des Reifens abstützen. Die Gestaltung ermöglicht außerdem ein geringes Gewicht des Greifers und sie vermeidet Reibungs- und Wartungsprobleme, die mit einer Gradführung der Greiferfinger verbunden wären.

Vorzugsweise ist jeweils ein Lenker der Greiferarme an jedem Ende durch zwei im Abstand voneinander angeordnete, koaxiale Drehgelenke einerseits mit dem Grundkörper und andererseits mit einem Greiferfinger verbunden, wobei die Achsen der Drehgelenke tangential zur Mittelachse des Greifers ausgerichtet sind. Durch diese Ausbildung wird eine torsionssteife Verbindung zwischen den Greiferfingern und dem Grundkörper des Greifers erreicht. Die Greiferfinger können nach der Erfindung zur Mittelachse des Greifers parallele Halteplatten haben, die zur Anlage an der Lauffläche des Luftreifens bestimmt sind. Außerdem können in einer gemeinsamen radialen Ebene angeordnete Anlageflächen zur Abstützung der Greiferfinger an der Seitenwand der Luftreifen vorgesehen sein.

Nach einem weiteren Vorschlag der Erfindung kann vorgesehen sein, dass die von einem Antrieb zum Drehen der Scheibe erzeugte Schließweg zum Andrücken der Greiferfinger an einen von ihnen gehaltenen Luftreifen einstellbar ist. Durch Einstellen des Schließwegs kann die Schließkraft auf das für die jeweilige Reifengröße zulässige Maß begrenzt werden.

Die Erfindung wird nachfolgend anhand von Ausführungsbeispielen näher erläutert, die in der Zeichnung dargestellt sind. Es zeigen
- Figur 1: eine Seitenansicht einer Vorrichtung zur Montage von Luftreifen nach der Erfindung,
- Figur 2: einen Ausschnitt der Greifers der Vorrichtung gemäß Figur 1, teilweise geschnitten,
- Figur 3: eine Ansicht des Greifers gemäß Figur 2 in einer Offenstellung,
- Figur 4: eine Ansicht des Greifers gemäß Figur 2 in einer Schließstellung,
- Figur 5: eine weitere Ausführungsform eines Greifers für eine Vorrichtung nach der Erfindung.

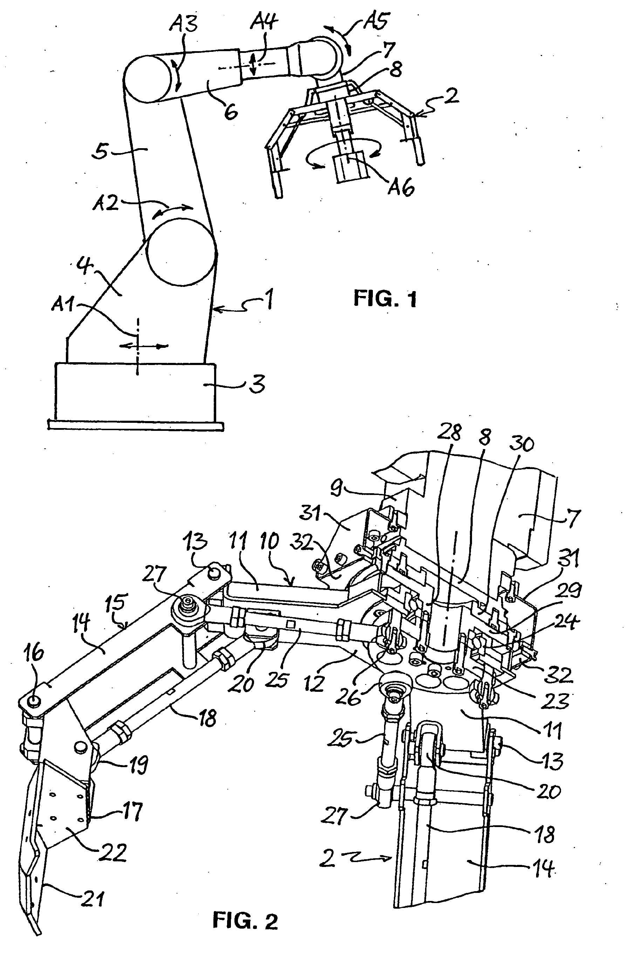

Die in Figur 1 gezeigte Vorrichtung umfasst einen Handhabungsroboter 1 und einen durch diesen bewegbaren Greifer 2, der zum Greifen und Halten von Luftreifen bei der Montage auf eine Felge dient. Der Handhabungsroboter 1 besteht aus einem feststehenden Grundgestell 3, auf dem sich um eine senkrechte Achse A1 ein Karussell 4 mit einer Schwinge 5, einem Arm 6 und einer Roboterhand 7 dreht. Die Schwinge 5 ist an dem Karussell 4 um eine waagrechte Achse A2 und der Arm 6 ist an der Schwinge 5 um eine waagrechte Achse A3 drehbar. Der Arm 6 besteht aus zwei Teilen, die relativ zueinander um eine in Längsrichtung des Arms 6 verlaufende Achse A4 drehbar sind. Die Roboterhand 7 ist an dem Arm 6 um eine quer zur Längsachse des Arms 6 verlaufende Achse A5 drehbar verbunden. An ihrem freien Ende hat die Roboterhand 7 einen um eine Achse A6 drehbaren Flansch 8. Alle Achsen A1 bis A6 des Handhabungsroboters 1 sind durch gesteuerte Servomotoren antreibbar. In die Servomotoren sind Bremsen und Resolver zur Drehwinkelmessung integriert. Der Roboter ist mit einer Steuerung ausgerüstet, die frei programmierbar ist und durch die jede der vorgenannten Achsen individuell in eine beliebige Drehwinkelstellung bewegbar und in dieser feststellbar ist.

Der in den Figuren 2 bis 4 deutlicher dargestellte Greifer 2 hat einen kreuzförmigen Grundkörper 10 mit vier Armen 11, die sich von einem zentralen Ringkörper 12 radial nach außen erstrecken. An den radial äußeren Enden der Arme 11 sind mittels zweier in einem Abstand voneinander angeordneter, koaxialer Drehgelenk 13 äußere Lenker 14 von Greiferarmen 15 schwenkbar gelagert. An den entgegengesetzten Enden der Lenker 14 sind mittels zweier im Abstand voneinander angeordneter Drehgelenke 16 Greiferfinger 17 schwenkbar gelagert. Die Achsen von Drehgelenk 13 und von Drehgelenk 16 eines jeden Lenkers 14 sind parallel und verlaufen senkrecht zu einer den jeweiligen Greiferarm teilenden radialen Ebene. Auf der der Greifermitte zugekehrten Seite der Lenker 14 sind in einem parallelen Abstand von diesen innere Lenker 18 angeordnet, die mit einem Ende durch ein Drehgelenk 19 mit einem Greiferfinger 17 und mit dem anderen Ende durch ein Drehgelenk 20 mit einem Arm 11 verbunden sind. Der Abstand des Drehgelenks 19 von der Achse der Drehgelenk 16 ist gleich dem Abstand des Drehgelenks 20 von der Achse der Drehgelenk 13. Weiterhin ist der Abstand der Drehgelenke 19, 20 im Wesentlichen gleich dem Abstand der Achsen der Drehgelenke 13 und 16. Hierdurch bilden die Lenker 14, 18 eine schwenkbare Parallelführung, durch die der mit den Lenkern verbundene Greiferfinger 17 beim Öffnen und Schließen des Greifers 2 seine vorgegebene Ausrichtung zur Mittelachse des Greifers 2 beibehält. Die Greiferfinger 17 haben jeweils eine zur Mittelachse des Greifers parallel ausgerichtete Halteplatte 21, die zur Anlage an der Lauffläche der Luftreifen bestimmt ist. Von der Halteplatte 21 erstreckt sich radial nach innen und senkrecht zu dieser eine Anlagefläche 22, mit der sich der Greifer an einer Seitenwand der Luftreifen abstützen kann.

Zum Öffnen und Schließen des Greifers müssen die Greiferarme synchron auseinander oder zueinander bewegt werden. Zur Erzeugung dieser synchronen Bewegung ist eine drehbare Scheibe 23 vorgesehen, die mit Hilfe eines Vierpunkt-Wälzlagers 24 in der zentralen Öffnung des Ringkörpers 12 drehbar gelagert ist. Die Scheibe 23 ist mit jedem Greiferarm 15 durch ein stangenförmiges Kuppelglied 25 verbunden. Die Kuppelglieder 25 sind gleich lang und tragen an ihren Enden Gelenke 26, 27 mit wenigstens zwei Freiheitsgraden, insbesondere Kugelgelenke. Mit dem Gelenk 26 sind die Kuppelglieder 25 an der Scheibe 23 befestigt. Die Gelenke 26 sind hierbei in einem Winkelabstand von 90° und im gleichen Abstand von der Drehachse der Scheibe 23 angeordnet. Mit den Gelenken 27 sind die Kuppelglieder 25 in einem Abstand von der Achse der Drehgelenk 13 an den äußeren Lenkern 14 befestigt. Wird die Scheibe 23 gedreht, so bewegen sich die Kuppelglieder 25 in Bezug auf die ihnen benachbarten Arme 11 des Grundkörpers 10 in radialer Richtung, wodurch die an den Armen 11 gelagerten Greiferarme 15 eine Schwenkbewegung in der entsprechenden Richtung ausführt.

Die Scheibe 23 ist auf einer Seite des Ringkörpers 12 angeordnet und an einer Nabe 28 eines auf der anderen Seite des Ringkörpers 12 angeordneten Ringflansches 29 angeschraubt. Die Nabe 28 erstreckt sich durch den Innenring des Verpunkt-Wälzlagers 24 und ist durch dieses drehbar gelagert.

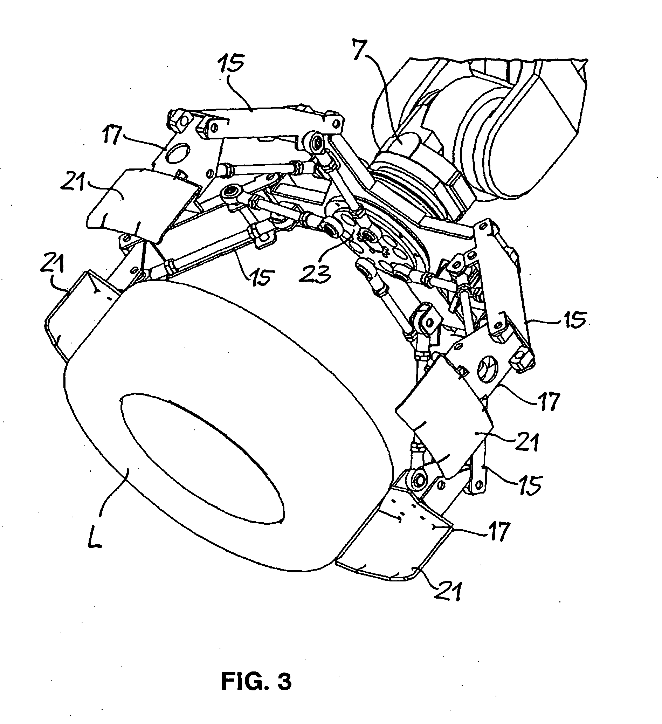

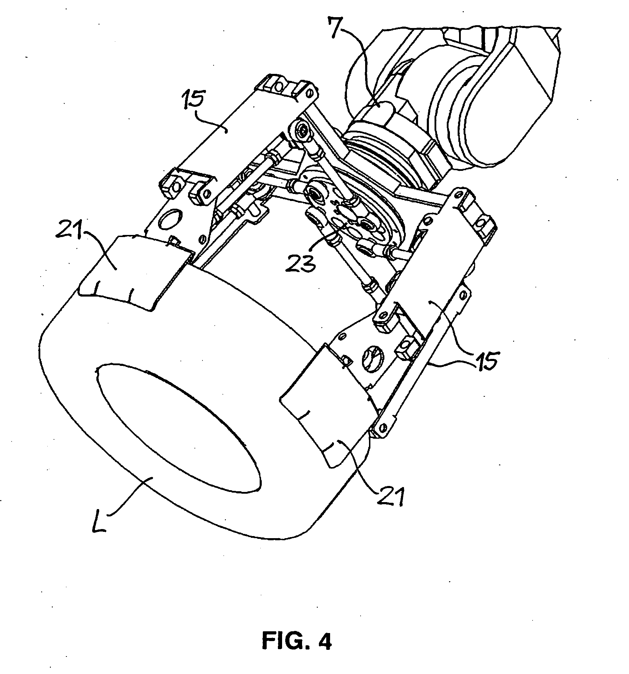

Zum Greifen eines Reifens wird der Greifer 2, wie in Figur 3 gezeigt, durch gesteuertes Drehen der Scheibe 23 mit Hilfe des Servoantriebs für den Flansch 8 in eine Offenstellung bewegt, in der der Abstand der einander gegenüberliegenden Halteplatten 21 größer ist als der Außendurchmesser des zu greifenden Luftreifens L, der üblicherweise auf einer hier nicht dargestellten Halterung ruht. Durch die Parallelführung der Greiferfinger 17 sind die Halteplatten 21 unabhängig von der Öffnungsstellung des Greifers 2 parallel zur Greifermittelachse ausgerichtet, so dass sie sich gleichmäßig an die Umfangsfläche des Reifens L anlegen können. Um die Halteplatten 21 mit dem Reifen in Kontakt zu bringen, wird die Scheibe 23 durch den Antrieb an der Roboterhand 7 in der Darstellung im Uhrzeigersinn gedreht. Hierdurch bewegen sich die Greiferarme 15 synchron in Richtung auf die Mittelachse des Greifers 2, bis sie eine Stellung erreichen, in der die Halteplatten 21 an dem Luftreifen L zur Anlage kommen, wie in Figur 4 gezeigt ist. Um die für das Halten des Luftreifens L richtige Anpresskraft zu erzielen, ist die Steuerung des Servomotors so programmiert, dass in der Endstellung der Greiferarme 15 der Durchmesser zwischen den Halteplatten 21 um einen definierten Betrag kleiner ist als der Außendurchmesser des Luftreifens L. Die gewünschte Haltekraft ergibt sich dann aus dem Verformungswiderstand, den der Luftreifen L den Halteplatten entgegensetzt, wenn diese bei ihrer Bewegung auf den kleineren Durchmesser den Reifen elastisch verformen. Die beschriebene Art, die gewünschte Haltekraft zu erreichen, erfordert keine aufwendigen Messeinrichtungen, da die Größe der Reifen, die von dem Greifer zu halten sind, bei der Reifenmontage im Vorhinein jeweils feststeht und bei der Programmierung des Montageprozesses berücksichtigt wird. Das erforderliche Maß der Durchmesserunterschreitung kann für die jeweilige Reifengröße empirisch ermittelt werden und steht dann für alle folgenden Montagevorgänge fest.

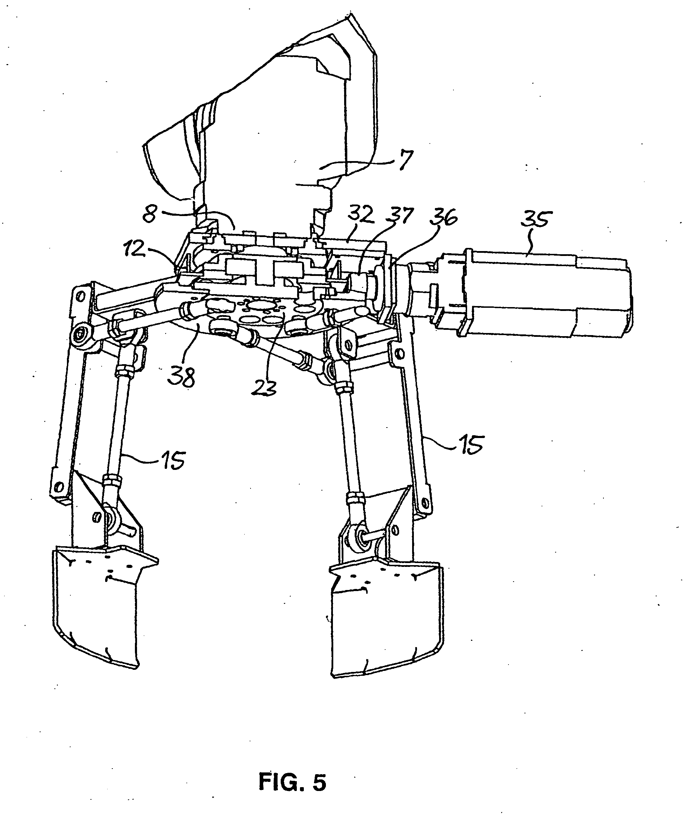

Wie in Figur 5 gezeigt, ist der Greifer 2 so an der Roboterhand 7 angeordnet, dass er relativ zur Roboterhand 7 gedreht werden kann. Dies eröffnet die Möglichkeit, einen Luftreifen bei der Montage mit Hilfe des Greifers 2 um seine Rotationsachse in eine bestimmte Drehwinkelstellung zu drehen, um die an dem Reifen und an der Felge markierten Matchpunkte miteinander zur Deckung zu bringen. Der Matchpunkt kennzeichnet beim Luftreifen das Maximum der ersten harmonischen Radialkraftschwankung und bei der Felge die tiefste Stelle der Rundlaufabweichung. Werden bei der Montage diese Stellen an Reifen und Felge zueinander gebracht, so erreichen die Rundlaufeigenschaften des montierten Reifens ein Optimum.

Um mit Hilfe des Greifers 2 einen Luftreifen drehwinkelgenau positionieren zu können, ist der Ringkörper 12 des Greifers 2 mit dem Teil 32 an dem Flansch 8 der Roboterhand 7 befestigt. Hierdurch kann mit Hilfe des in beliebige Drehwinkelstellungen bewegbaren Servomotors der Roboterhand 7 der Greifer 2 in die jeweils zum Matchen erforderliche Position gedreht werden. Dies hat zur Folge, dass der Servomotor der Roboterhand 7 zum Antrieb der Greiferarme 15 nicht mehr zur Verfügung steht. Der Greifer 2 ist deshalb mit einem eigenständigen Antrieb ausgerüstet. Der Antrieb besteht aus einem Servomotor 35, der mit einem Halter 36 an dem Teil 32 des Ringkörpers 12 befestigt ist. Der Servomotor 35 treibt über ein integriertes Übersetzungsgetriebe ein Kegelrad 37 an, das mit einem an der Scheibe 23 befestigten Zahnkranz 38 in Eingriff ist. Der Servomotor 35 ist über Energieversorgungs- und Signalleitungen an die Steuerung des Handhabungsroboters angeschlossen, so dass über diese das Öffnen und Schließen des Greifers 2 gesteuert werden kann.

## Patentansprüche

1. Vorrichtung zur Montage eines Luftreifens auf eine Felge eines Fahrzeugrades mit einem Handhabungsroboter, der eine um mehrere Achsen bewegbare Roboterhand mit einem drehend antreibbaren Flansch aufweist, und mit einem an der Roboterhand angebrachten Greifer, der einen Grundkörper und wenigstens zwei radial zur Mittelachse des Greifers bewegbare Greiferarme aufweist, wobei die Greiferarme mit einer Synchronisiereinrichtung gekoppelt sind, welche die radiale Bewegung der Greiferarme synchronisiert, wobei die Synchronisiereinrichtung eine an dem Grundkörper (10) des Greifers (2) um dessen Mittelachse drehbar gelagerte und durch einen Motor drehend antreibbare Scheibe (23) und Kuppelglieder (25) aufweist, die mittels Gelenken (26, 27) an der Scheibe (23) und den Greiferarmen (15) derart befestigt sind, dass eine Drehung der Scheibe (23) eine synchrone, radiale Bewegung der Greiferarme (15) bewirkt, **dadurch gekennzeichnet, dass** der Grundkörper (10) des Greifers (2) an dem drehend antreibbaren Flansch (8) der Roboterhand (7) befestigt ist und dass die drehbar an dem Grundkörper (10) gelagerte Scheibe (23) durch einen separaten, an dem Grundkörper befestigten Motor (35) drehend antreibbar ist.

2. Vorrichtung nach Anspruch 1, **dadurch gekennzeichnet, dass** der Flansch (8) der Roboterhand (7) mit Hilfe eines Stellantriebs in eine beliebige Drehwinkelstellung bewegbar und in dieser feststellbar ist.

3. Vorrichtung nach einem der vorhergehenden Ansprüche, **dadurch gekennzeichnet, dass** jeder Greiferarm (15) zwei parallele Lenker (14, 18) hat, die jeweils durch Drehgelenke (13, 16, 19, 20) mit ihren einen Enden mit dem Grundkörper (10) und mit ihren anderen Enden mit einem Greiferfinger (17) derart schwenkbar verbunden sind, dass die Lenker (14, 18) eine Parallelführung für die Greiferfinger (17) bilden.

4. Vorrichtung nach dem vorhergehenden Anspruch, **dadurch gekennzeichnet, dass** ein Lenker (14) des Greiferarms (15) an jedem Ende durch zwei koaxiale Drehgelenke (13, 16) mit dem Grundkörper (10) und mit einem Greiferfinger (17) verbunden ist, wobei die Achsen der zwei koaxialen Drehgelenke (13, 16) tangential zur Mittelachse des Greifers (2) ausgerichtet sind.

5. Vorrichtung nach einem der vorhergehenden Ansprüche, **dadurch gekennzeichnet, dass** die drehbare Scheibe (23) mit einem Vierpunkt-Wälzlager an dem Grundkörper (10) gelagert ist.

6. Vorrichtung nach einem der vorhergehenden Ansprüche, **dadurch gekennzeichnet, dass** die Greiferfinger (17) zur Mittelachse des Greifers (2) parallele Halteplatten (21) zur Anlage an der Lauffläche eines Luftreifens und in einer gemeinsamen radialen Ebene angeordnete Anlageflächen (22) zur Abstützung der Greiferfinger an der Seitenwand eines Luftreifens aufweisen.

7. Vorrichtung nach einem der vorhergehenden Ansprüche, **dadurch gekennzeichnet, dass** der Schließweg der Greiferfinger (17) einstellbar ist.

## Claims

1. Device for mounting a pneumatic tyre onto a vehicle wheel rim, the device having a handling robot including a robot hand, which is movable about a plurality of axes and comprises a rotationally drivable flange, and having a gripper which is attached to the robot hand and comprises a base element and at least two gripper arms which are movable radially relative to the centre axis of the gripper, the gripper arms being coupled to a synchronisation device which synchronises the radial movement of the gripper arms, wherein the synchronisation device comprises a disc (23), mounted on the base element (10) of the gripper (2) so as to be rotatable about the centre axis of the gripper and rotationally drivable via a motor, and coupling members (25) which are fixed to the disc (23) and the gripper arms (15) via hinged joints (26, 27) in such a way that a rotation of the disc (23) produces a synchronous radial movement of the gripper arms (15), **characterised in that** the base element (10) of the gripper (102) is fixed to the rotationally drivable flange (8) of the robot hand (7) and **in that** the disc (23) rotatably mounted on the base element (10) can be driven in rotation by a separate motor (35) fixed to the base element.

2. Device according to claim 1, **characterised in that** the flange (8) of the robot hand (7) can be moved into any desired rotational angle position by means of an actuator and can be locked in said position.

3. Device according to any one of the preceding claims, **characterised in that** each gripper arm (15) includes two parallel links (14, 18), which are each connected pivotally at one end to the base element (10) and at the other end to a gripper finger (17) via swivel joints (13, 16, 19, 20) in such a way that the links (14, 18) form a parallel guide for the gripper fingers (17).

4. Device according to the preceding claim, **characterised in that** a link (14) of the gripper arm (15) is connected at each end to the base element (10) and to a gripper finger (17) via two coaxial swivel joints (13, 16), the axes of said two coaxial swivel joints (13, 16) being oriented tangentially to the centre axis of the gripper (2).

5. Device according to any one of the preceding claims, **characterised in that** the rotatable disc (23) is mounted on the base element (10) via a four-point antifriction bearing.

6. Device according to any one of the preceding claims, **characterised in that** the gripper fingers (17) include retaining plates (21), which are parallel to the centre axis of the gripper (2), so as to abut the tread of a pneumatic tyre, and contact surfaces (22) arranged in a common radial plane to support the gripper fingers on the side wall of a pneumatic tyre.

7. Device according to any one of the preceding claims, **characterised in that** the closing path of the gripper fingers (17) is adjustable.

## Revendications

1. Dispositif pour le montage d'un pneumatique sur une jante d'une roue de véhicule automobile, pourvu d'un robot de manutention qui est muni d'une main de robot mobile autour de plusieurs axes et présentant un flasque pouvant être entraîné en rotation, et d'un outil de préhension disposé sur la main de robot, lequel outil de préhension est pourvu d'un corps principal et d'au moins deux bras de préhension mobiles de façon radiale par rapport à l'axe médian de l'outil de préhension, les bras de préhension étant couplés à un dispositif de synchronisation qui synchronise le mouvement radial des bras de préhension, le dispositif de synchronisation étant pourvu d'un disque (23) logé sur le corps principal (10) de l'outil de préhension (2) en étant pivotant autour de l'axe médian de ce dernier et pouvant être entraîné en rotation par un moteur ainsi que de membres de couplage (25) qui sont fixés au moyen d'articulations (26, 27) au disque (23) et aux bras de préhension (15) de telle sorte qu'une rotation du disque (23) provoque un mouvement synchrone et radial des bras de préhension (15), **caractérisé en ce que** le corps principal (10) de l'outil de préhension (2) est fixé au flasque (8) pouvant être entraîné en rotation de la main de robot (7), et **en ce que** le disque (23) logé pivotant sur le corps principal (10) peut être entraîné en rotation par un moteur (35) distinct fixé au corps principal.

2. Dispositif selon la revendication 1, **caractérisé en ce que** le flasque (8) de la main de robot (7) peut être déplacé à l'aide d'un dispositif de réglage dans une quelconque position angulaire et être bloqué dans cette position.

3. Dispositif selon l'une des revendications précédentes, **caractérisé en ce que** chaque bras de préhension (15) a deux guides parallèles (14, 18) qui sont reliés pivotants par l'une de leurs extrémités au corps principal (10) et par leur autre extrémité aux doigts de préhension (17), à chaque fois au moyen d'articulations pivotantes (13, 16, 19, 20), de telle sorte que les guides (14, 18) forment un guidage parallèle pour les doigts de préhension (17).

4. Dispositif selon l'une des revendications précédentes, **caractérisé en ce qu'**un guide (14) du bras de préhension (15) est relié à chaque extrémité par deux articulations pivotantes coaxiales (13, 16) au corps principal (10) et à un doigt de préhension (17), les axes des deux articulations pivotantes coaxiales (13, 16) étant orientés tangentiellement à l'axe médian de l'outil de préhension (2).

5. Dispositif selon l'une des revendications précédentes, **caractérisé en ce que** le disque pivotant (23) est logé sur le corps principal (10) avec un palier à roulement à quatre points de contact.

6. Dispositif selon l'une des revendications précédentes, **caractérisé en ce que** les doigts de préhension (17) sont munis de plaques de retenue (21) parallèles à l'axe médian de l'outil de préhension (2) et destinées à être appliquées contre la surface de roulement d'un pneumatique, et de surfaces d'appui (22) disposées dans un plan radial commun pour appuyer les doigts de préhension sur le bord latéral d'un pneumatique.

7. Dispositif selon l'une des revendications précédentes, **caractérisé en ce que** la course de fermeture des doigts de préhension (17) peut être réglée.
